# FASCICULE DE BREVET EUROPEEN

(11) **EP 3 116 310 B1**
(45) Date de publication et mention de la délivrance du brevet: **02.05.2018**
(21) Numéro de dépôt: 15717428.5
(22) Date de dépôt: 12.03.2015
(51) Int. Cl.: A01M 29/30, A01G 13/10

(54) **DISPOSITIF DE PROTECTION CONTRE LES GASTEROPODES TERRESTRES**
VORRICHTUNG ZUM SCHUTZ GEGEN TERRESTRISCHE GASTROPODEN
DEVICE FOR PROTECTION AGAINST TERRESTRIAL GASTROPODS

(30) Priorité: 14.03.2014 FR 1400625
(43) Date de publication de la demande: 18.01.2017
(73) Titulaire: Sylopido, 77940 Thoury Ferrotes (FR)
(72) Inventeur: GUIGAN, Sylvie France Marie Claire, 77940 Thoury Ferrotes (FR)
(74) Mandataire: Osha Liang
(86) Numéro de dépôt international: PCT/EP2015/055194
(87) Numéro de publication internationale: WO 2015/136042

(56) Documents cités:
- AT-U1- 6 063
- DE-A1- 10 208 554
- DE-U1-202005 003 167
- US-A- 4 319 423

## Description

### Domaine de l'invention

La présente invention concerne le domaine des dispositifs de protection d'une zone, de végétaux par exemple, contre l'invasion par des limaces, escargots, et autres gastéropodes terrestres.

### Etat de la technique

Plusieurs espèces de gastéropodes terrestres, et notamment les limaces, sont considérées comme de redoutables ravageurs des jardins potagers et des grandes cultures. De fait, ces animaux, dotés d'une voracité hors pair, affectionnent les mêmes végétaux que les humains. En outre, leurs corps éminemment souple et leur mode de locomotion, rampante et collante, leur permet de cheminer sur quasiment toutes les surfaces et au travers d'interstices beaucoup plus étroits que leur propre largeur.

Le problème s'est encore amplifié avec l'importance grandissante des nouvelles méthodes de cultures agricoles qui préconisent la réduction du travail du sol et sa protection par des couverts végétaux, deux conditions idéales pour la vie et la reproduction de ces gastéropodes.

Des pesticides sont fréquemment utilisés pour détruire ces animaux, mais ces produits sont toxiques pour l'environnement. Les chiens et les oiseaux, par exemple, peuvent être mortellement empoisonnés par l'ingestion d'une faible quantité de tels produits. En outre, la destruction des gastéropodes n'est pas souhaitable, parce que ces animaux jouent un rôle clé dans la valorisation des sols : ils participent à la décomposition de la matière organique et à la formation d'humus.

D'autres produits moins toxiques que les pesticides sont également utilisés, par exemple des cendres, ou du sel. Toutefois, la faible efficacité de ces produits diminue encore lorsque le temps est humide, c'est-à-dire quand les limaces s'activent.

Il est également connu d'utiliser des « pièges à bière ». Ce sont des récipients remplis de bière dans lesquels les limaces se noient en s'abreuvant. Ces pièges attirent, à proximité de la zone à protéger, de nombreux gastéropodes qui, sinon, n'auraient jamais rodé dans ces parages. Ils doivent en outre être régulièrement réapprovisionnés en bière et les pièges encombrés de cadavres de limaces sont malplaisants à nettoyer.

Des revêtements de cuivre sont occasionnellement utilisés comme obstacles dissuasifs, mais ce métal est onéreux et seulement partiellement dissuasif.

Il est également connu d'utiliser des barrières mécaniques présentant deux parois fortement déclives jointes selon un angle fortement obtus. Ces barrières sont destinées à empêcher les gastéropodes de ramper au-delà de l'angle obtus, mais l'efficacité dissuasive de ce type d'obstacle est seulement provisoire.

Le document de brevet GB2286759A décrit une paroi verticale comportant un bord retombant du côté opposé aux plantes à protéger, mais les schémas joints à ce brevet montrent des dispositifs pouvant être aisément contournés par les limaces. Les limaces peuvent en effet aisément coller la partie postérieure de leur pied à la paroi verticale du dispositif, puis aller chercher accroche sur la paroi externe du bord retombant de cette paroi, en enjambant l'espace qui sépare cette paroi verticale de ce bord retombant. Cette partie externe du bord retombant leur offre ensuite un accès facile à la face de la paroi verticale située du côté de la zone interdite. Le document FR2821713 décrit une barrière pour protéger les plantes du même type que celle de GB2286759A.

Le document de brevet DE 202005003167U1 décrit un autre exemple de barrière mécanique formée d'une paroi verticale ayant un rebord supérieur orienté horizontalement vers l'extérieur de la zone de plantation à protéger.

Les documents de brevets EP0232914A1 et EP0307690A1 décrivent des parois comportant des bandes tapissées d'une multiplicité d'aiguilles ou de poils hérissés, destinées à stopper la progression des gastéropodes, mais la quantité de matériau nécessaire à la réalisation de ces alignements d'aiguilles ou de poils est souvent prohibitive.

### Problème à résoudre

Le problème à résoudre concerne la protection d'une zone, notamment de végétaux, contre les gastéropodes terrestres, c'est-à-dire contre ces mollusques rampants qui ont la réputation de pouvoir se faufiler quasiment sur toutes les surfaces et au travers des plus petits interstices, grâce à leur pied souple, musclé et collant.

Le problème est également augmenté par la diversité des tailles de ces animaux, et notamment des limaces. En effet, les limaces de toutes les espèces sont très petites lorsqu'elles éclosent de leur oeuf, mais une fois adultes la majorité des espèces susceptibles de causer des dégâts dans les potagers peut être classée en deux grandes catégories de tailles :
- les espèces de grandes tailles, comme par exemple Limax maximus, Arion rufus ou Arion vulgaris qui mesurent entre 10 cm et 20 cm de long et entre 1 cm et 2 cm de hauteur.
- les espèces de petites tailles, comme Arion hortensis mesurant environ 2 cm à 3 cm de long et environ 3 mm de hauteur et Déroceras reticulatum mesurant environ 3 cm à 5 cm de long et environ 5 mm de hauteur.

### But de l'invention

Le but de l'invention est de fournir un dispositif de protection efficace et pratique contre les gastéropodes terrestres, et notamment les limaces, tout en protégeant la biodiversité, c'est-à-dire sans utiliser de pesticides et sans détruire ces animaux qui ont leur place dans l'écosystème.

### Exposé et avantages de l'invention

La présente invention a pour objet un dispositif de protection, d'une zone de végétaux par exemple, contre les gastéropodes terrestres. Ce dispositif comprend au moins une barrière comportant :
- un socle destiné à fixer la barrière à la périphérie de la zone à protéger,
- une paroi, également nommée ci-après « paroi plafond », aboutée au socle,
- une grille s'étendant le long de la paroi plafond et à distance de celle-ci et, en particulier, sensiblement parallèlement à la paroi plafond,
- un espace entre cette grille et cette paroi plafond,
- au moins un moyen de barrage empêchant les gastéropodes de la catégorie de tailles ciblée par la barrière de se déplacer dans cet espace.

Le socle et la paroi plafond présentent des interstices inexistants (il s'agit dans ce cas de surfaces pleines) ou suffisamment petits pour empêcher les gastéropodes de la catégorie de tailles ciblée par la barrière, de se faufiler au travers.

Lorsque la barrière est fixée à la périphérie de la zone à protéger, la paroi plafond peut être orientée vers l'extérieur de la zone à protéger, dans une direction divergeant de la verticale, la grille étant alors disposée en dessous de la paroi plafond. En variante, la paroi plafond peut être orientée verticalement. Dans ce cas, la grille s'étend également sensiblement verticalement et, lorsque la barrière est utilisée, la grille est du côté opposé à la zone à protéger, i.e. la paroi plafond se situe entre la zone à protéger et la grille.

Le socle peut comprendre une paroi dont une des extrémités est destinée à être enfoncée dans le sol, ou encore fixée à un support, et dont l'autre extrémité est destinée à être aboutée sur toute sa longueur à la paroi plafond.

Le socle et la paroi plafond peuvent également être intégrés à un support délimitant la périphérie de la zone à protéger, comme par exemple la paroi externe d'un pot pour plantes. En particulier, le socle peut être formé par la paroi latérale du pot tandis que la paroi plafond peut être formée par le rebord supérieur de ce pot.

La paroi plafond peut être alignée avec la paroi du socle ou former un angle avec celle-ci.

Dans certains modes de réalisation, lorsque la barrière est en position autour de la zone à protéger, la paroi du socle peut s'étendre suivant une direction sensiblement verticale. La paroi plafond peut former un angle avec la paroi du socle. Lorsque cet angle est droit (i.e. environ 90°), la paroi plafond s'étend suivant une direction sensiblement horizontale. Lorsque cet angle est obtus, la paroi plafond s'étend obliquement vers l'extérieur de la zone à protéger et vers le haut. Lorsque cet angle est aigu, la paroi plafond s'étend obliquement vers l'extérieur de la zone à protéger et vers le bas. La paroi plafond peut également être alignée avec la paroi du socle, elle s'étend alors suivant une direction sensiblement verticale.

Dans certains modes de réalisation, la grille comprend des mailles de sections prédéterminées qui entourent des espaces vides (ou espaces inter-mailles) de dimensions prédéterminées. Les dimensions et la densité surfacique de ces mailles déterminent la surface d'accroche de la grille. Les dimensions de ces mailles et de ces espaces vides sont choisies pour empêcher les animaux de la catégorie de tailles ciblée par la barrière de ramper en s'accrochant à la face externe, de la grille. En effet, pour qu'un gastéropode terrestre réussisse à ramper dans une direction qui sollicite le recours à des forces divergentes de sa propre pesanteur, il faut que la paroi sur laquelle il s'accroche présente une surface d'accroche suffisamment importante en regard de son pied sécréteur de mucus adhésif.

Dans certains modes de réalisation, les dimensions des espaces vides de cette grille sont également suffisamment faibles pour empêcher les gastéropodes de cheminer en s'accrochant sur la face interne de la paroi plafond, faisant face à la face interne de la grille.

Dans certains modes de réalisation, la hauteur de l'espace, séparant cette grille de la paroi plafond qui lui fait face, est suffisamment importante pour empêcher les gastéropodes de ramper en s'accrochant simultanément sur la face externe de la grille et la face interne de la paroi plafond.

Dans certains modes de réalisation au moins une tige est disposée longitudinalement en regard de la face externe de la grille, à une distance suffisamment faible pour empêcher les gastéropodes de se faufiler entre la grille et la tige. La tige peut être fixée à la paroi plafond par des pattes s'étendant aux extrémités de la tige. La tige peut présenter une surface d'accroche suffisamment faible pour empêcher les gastéropodes de s'y accrocher transversalement.

Plusieurs moyens de barrage utilisés seuls ou en combinaison et destinés à empêcher les gastéropodes de la catégorie ciblée de ramper dans cet espace peuvent être envisagés.

Un moyen de barrage peut être une hauteur prédéterminée de l'espace entre la grille et la paroi plafond, cette hauteur prédéterminée étant suffisamment faible pour dissuader et/ou empêcher les gastéropodes de se faufiler dans l'espace.

Un autre moyen de barrage peut être au moins une cloison longitudinale orientée du haut vers le bas dans l'espace (i.e. dans le sens de la hauteur de cet espace), compartimentant longitudinalement l'espace et ne présentant aucun interstice ou des interstices suffisamment petits pour empêcher les gastéropodes de la catégorie de tailles ciblée par la barrière, de se faufiler au travers. Avantageusement, le positionnement d'une cloison longitudinale, à proximité de la frontière entre le socle et la paroi plafond, permet de bloquer le cheminement des gastéropodes dès l'orée de cette paroi plafond.

Un autre moyen de barrage peut être un entrecroisement de cloisons longitudinales et transversales orientées du haut vers le bas dans l'espace et compartimentant celui-ci. Ce cloisonnement multiple de l'espace entrave le cheminement des gastéropodes qui sont moins hauts que l'espace.

Un autre moyen de barrage peut être au moins une grille intermédiaire disposée le long de la paroi plafond et à distance de celle-ci, et en particulier de façon sensiblement parallèle à la paroi plafond. Cette grille intermédiaire compartimente l'espace en au moins deux sous-espaces. Elle permet d'empêcher ou de dissuader les gastéropodes de la catégorie de tailles ciblée de circuler dans ledit espace. En outre, la hauteur limitée des sous-espaces permet d'empêcher ou de dissuader des gastéropodes de tailles plus petites que la catégorie de tailles précitée de se faufiler dans les sous-espaces. Les hauteurs des sous-espaces aménagés au sein de l'espace initial peuvent être choisies différentes de manière à entraver le cheminement de gastéropodes de tailles différentes. Les deux grilles peuvent avoir des dimensions identiques et être disposées de sorte que leurs mailles soient alignées lorsqu'elles sont vues depuis une direction orthogonale aux grilles, de façon à empêcher les gastéropodes de prendre appui sur une grille pour progresser sur l'autre.

Dans certains modes de réalisation, la largeur de la grille est prédéterminée de manière à empêcher les gastéropodes de l'enjamber, en accrochant leur pied de part et d'autre de la grille.

Dans certains modes de réalisation et, en particulier, lorsque la paroi plafond est orientée dans une direction divergeant de la verticale, la hauteur du socle est prédéterminée de manière à empêcher les gastéropodes d'accéder à la face externe, ou face supérieure, de la paroi plafond en se dressant sur leur pied, avant même d'accéder au socle.

Dans certains modes de réalisation, des barrières de dimensions différentes peuvent être imbriquées afin de protéger une zone contre de gastéropodes appartenant à des catégories de tailles différentes.

Dans certains modes de réalisation, le dispositif comprend une pluralité de barrières juxtaposées et des moyens d'aboutement de deux barrières adjacentes.

Ces moyens d'aboutement sont destinés à faciliter l'alignement des barrières adjacentes et à empêcher les gastéropodes de se faufiler dans l'interstice qui les sépare.

Un premier moyen d'aboutement peut permettre de relier deux barrières pouvant être précisément alignées. Dans ce mode de réalisation, le socle de chaque barrière comprend une paroi sensiblement plane à une extrémité et à l'autre extrémité, un étrier destiné à coopérer avec la paroi plane du socle de la barrière adjacente, suivant le principe d'une liaison glissière. Une barrière ciblant les gastéropodes de petites tailles est fixée sur la paroi de l'étrier située du côté opposé à la zone de végétaux à protéger. La paroi de l'étrier située du même côté que la zone de végétaux à protéger est aboutée à un socle destiné à recouvrir les extrémités des deux socles adjacents situés au dessus de cet étrier. Ce socle prolongeant la paroi de l'étrier est lui-même prolongé par une paroi, nommée paroi plafond, parce qu'elle présente les mêmes propriétés que les parois plafond des barrières. Cette paroi plafond est plaquée contre les extrémités des parois plafonds des deux barrières aboutées qu'elle surplombe.

Un deuxième moyen d'aboutement peut permettre de relier deux barrières adjacentes lorsque la nature du terrain ou la configuration de l'enclos entrave la précision de leur alignement. Ce deuxième moyen d'aboutement présente les mêmes propriétés que le moyen d'aboutement précédemment décrit, à l'exception du socle et de la paroi plafond qui sont remplacés par une barrière ciblant les grandes limaces.

Un troisième moyen d'aboutement peut comprendre une barrière de raccordement emboîtée à cheval sur les deux barrières aboutées. Ce troisième moyen d'aboutement comporte un étrier glissière, un socle et une paroi plafond analogues à ceux du premier moyen d'aboutement. Du côté opposé à la zone des végétaux à protéger, l'extrémité supérieure de l'étrier glissière se trouve à quelques millimètres en dessous des deux grilles aboutées. Cette extrémité est aboutée à au moins une grille, dite grille de raccordement, présentant la même largeur et les mêmes dimensions de mailles que les grilles des deux barrières aboutées. Son extrémité libre est aboutée sur toute sa longueur à la base d'une cloison de hauteur approximativement identique à la hauteur séparant l'extrémité supérieure de l'étrier glissière des grilles des barrières aboutées. Le sous espace créé entre les grilles des barrières aboutées et la grille de raccordement présente une hauteur suffisamment importante pour empêcher les limaces de ramper à cheval sur les grilles superposées et suffisamment faible pour empêcher les limaces de ramper entre ces grilles superposées. La cloison aboutée à l'extrémité libre de la grille de raccordement est liée aux deux barrières aboutées ou bien à la paroi plafond du moyen d'aboutement par un système de clip, de lien, d'agrafe ou de ruban collant. Le socle, la paroi plafond, la grille de raccordement et la cloison située à son extrémité libre constituent les éléments de cette barrière de raccordement, qui est associée à l'étrier glissière pour constituer ce troisième moyen d'aboutement.

Ce troisième moyen d'aboutement ainsi constitué d'un étrier glissière et de l'emboîture de la barrière de raccordement autour des deux barrières aboutées empêche les limaces d'accéder à la zone de jonction des deux barrières aboutées.

Ces trois moyens d'aboutement empêchent les petits et les grands gastéropodes de se faufiler entre deux barrières adjacentes, lorsque celles-ci sont précisément ou imprécisément alignées.

Ainsi le dispositif de protection garantit la protection efficace d'une zone contre les gastéropodes terrestres tout en respectant la biodiversité, parce que les gastéropodes, qui abordent un enclos réalisé avec une pluralité de barrières aboutées ne sont pas occis. Ils sont seulement contraints de rebrousser chemin. En effet, les interstices de l'enclos et des barrières sont trop étroits pour que les gastéropodes s'y faufilent, les barrières sont trop larges et trop hautes pour être enjambées et toutes les faces de leurs parois plafonds et de leurs grilles sont inaccessibles au cheminement.

### Brève description des figures

Le présent dispositif sera mieux compris à la lecture de la description détaillée qui suit, de modes de réalisation pris à titre d'exemples nullement limitatifs. Cette description se réfère aux dessins annexés sur lesquels :
- les figures 1A à 1D montrent diverses vues d'un exemple de dispositif de protection contre les limaces de grandes tailles, destiné à être planté dans le sol, selon un premier mode de réalisation ;
- Les figures 1E à 1G montrent trois vues d'une variante du dispositif de protection décrit sur les figures 1A à 1D ;
- les figures 2A à 2D montrent diverses vues d'un exemple de dispositif de protection ciblant les limaces de petites tailles et intégré à un pot pour plantes, selon un deuxième mode de réalisation;
- la figure 2E et 2F montrent deux vues d'une variante du dispositif des figures 2A-2D ;
- les figures 3A à 3D montrent diverses vues d'un exemple de dispositif de protection destiné à être planté dans le sol et visant à stopper des limaces de deux catégories de tailles différentes, selon un troisième mode de réalisation ;
- la figure 4 est une vue de dessus d'un dispositif de protection comportant une pluralité de barrières aboutées de manière à former un enclos ;
- les figures 5A à 5E montrent cinq vues d'un moyen d'aboutement destiné à relier deux barrières adjacentes précisément alignées ;
- les figures 6A et 6B montrent deux vues d'un moyen d'aboutement destiné à relier deux barrières adjacentes imprécisément alignées.
- les figures 7A à 7E montrent cinq vues d'un troisième moyen d'aboutement destiné à relier deux barrières adjacentes.

### Description détaillée des modes de réalisation du dispositif

### (Premier mode de réalisation)

Un premier mode de réalisation du dispositif de protection est présenté sur :

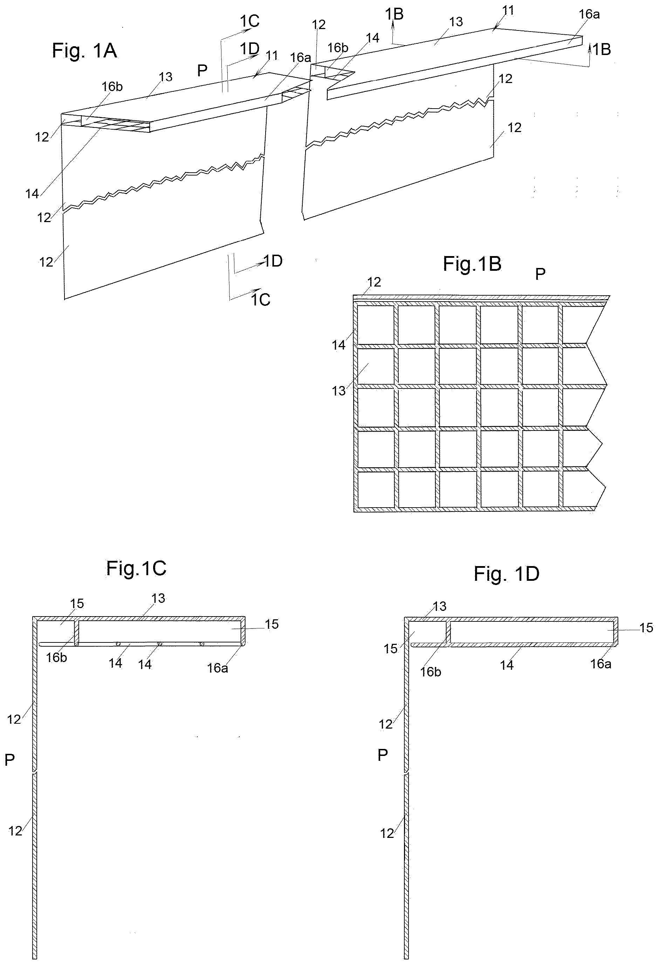

- la figure 1A qui est une vue en perspective d'une barrière 11 destinée à être enfoncée dans le sol (non représenté),
- la figure 1B qui est une vue en coupe longitudinale et horizontale au niveau de la grille 14 de la figure 1A.
- la figure 1C qui est une vue en coupe transversale de la barrière 11, la coupe étant effectuée au niveau des espaces vides situés entre les mailles de la grille 14,
- la figure 1D qui est une vue en coupe transversale de la barrière, la coupe étant effectuée au niveau des portions des mailles de la grille 14 perpendiculaires au socle.

Ce dispositif de protection est destiné à être planté dans le sol afin de protéger une zone de potager P contre les gastéropodes de grandes tailles.

Il comprend une barrière 11 comportant un socle 12 mince et longiligne, destiné à être planté sensiblement verticalement dans le sol. Son extrémité supérieure est intimement aboutée, sur toute sa longueur, à une paroi plafond 13 orientée sensiblement perpendiculairement au socle en direction opposée de la zone de végétaux P à protéger. Lorsque le socle 12 est planté dans le sol, la paroi plafond 13 est sensiblement horizontale.

L'extrémité de cette paroi plafond 13 la plus éloignée du socle est aboutée sur toute sa longueur à une cloison 16a qui plonge verticalement. Cette cloison 16a peut mesurer, par exemple, environ 5 mm de haut.

L'extrémité inférieure de cette cloison 16a est aboutée à une grille 14 approximativement horizontale et sensiblement de même périmètre que la paroi plafond 13. La grille 14 fait face et se situe sous la paroi plafond 13. Sur le mode de réalisation des figures 1A à 1D, cette grille 14 mesure, par exemple, environ 50 mm de large. Elle est constituée d'un grillage présentant des mailles entourant des espaces vides de formes approximativement carrées mesurant, par exemple, environ 13 mm de côté. La section transversale des barreaux de la grille 14 a, par exemple, un diamètre d'environ 1 mm.

Une autre cloison sensiblement verticale 16b, située à proximité du socle 12, compartimente longitudinalement l'espace 15 situé entre les deux parois. Cette cloison 16b est orientée du haut vers le bas dans cet espace 15. Elle est adjacente en haut à la paroi plafond 13 et en bas à une partie de la grille 14. En variante, la cloison 16b pourrait s'étendre sur une partie seulement de la hauteur de l'espace 15.

Le socle 12 est destiné à arrimer la barrière à la périphérie de la zone P à protéger. Sa hauteur destinée à être enterrée est prédéterminée de façon à optimiser la stabilisation du dispositif dans le sol et à empêcher les gastéropodes de se glisser dessous pour atteindre la zone protégée. Sa hauteur prédéterminée au dessus du sol est suffisamment importante pour empêcher les gastéropodes ciblés de se hisser directement sur la face supérieure de la paroi plafond 13 en se dressant sur leur pied, avant même d'accéder au socle.

Le socle 12 et la paroi plafond 13 présentent des interstices inexistants ou suffisamment petits pour empêcher les gastéropodes de la catégorie visée par la barrière de se faufiler au travers. En d'autres termes, le socle 12 et la paroi plafond 13 peuvent être des surfaces pleines ou des surfaces ajourées présentant des interstices de petite taille.

Les cloisons 16a et 16b présentent également des interstices inexistants ou suffisamment petits pour empêcher les gastéropodes de la catégorie ciblée de se faufiler au travers. Ces cloisons 16a et 16b servent de moyen de barrage 2 pour entraver le cheminement des gastéropodes dans l'espace 15. Avantageusement, l'alignement de la base de la cloison 16b sur une partie matérialisée (i.e. sur une ligne de barreaux) de la grille 14 empêche les gastéropodes de trouver accroche sur la base de cette cloison 16b.

La position sensiblement horizontale de la grille 14 accroît au maximum la difficulté d'accroche des gastéropodes sur sa face externe ou face inférieure. En effet, la force de gravité d'un gastéropode accroché à la face inférieure d'une paroi horizontale est directement opposée à sa force d'accroche.

Par exemple, sur le mode de réalisation des figures 1A à 1D, le socle 12, la paroi plafond 13 et la cloison 16A peuvent être réalisés en un matériau synthétique de type plastique, résistant aux rayons ultraviolets, et la grille 14 peut être réalisée en un matériau métallique (e.g. en acier inoxydable, en fer, etc.).

En variante, le socle 12, la paroi plafond 13, la cloison 16A et la grille 14 peuvent être constitués d'un grillage de fil de fer (non représenté) doublé d'un film en matière plastique non déformable et résistant aux ultraviolets (non représenté). Ainsi, le socle 12, la paroi plafond 13, la cloison 16A et la grille 14 peuvent constituer différentes parties d'un même grillage (ou treillis) replié sur lui-même. Plus généralement, la cloison 16A seule, la cloison 16A et la paroi plafond 13, ou la cloison 16A et la paroi plafond 13 et le socle 12, peuvent être réalisés en une seule pièce avec la grille 14.

Ce mode de réalisation, effectué avec des matériaux pratiques à manipuler artisanalement, n'est qu'un exemple, non limitatif, des matériaux pouvant être choisis pour la réalisation du dispositif. Il est compatible avec le maintien en forme du socle 12, de la paroi plafond 13, de la grille 14 et de la cloison 16a. La faible épaisseur du socle 12 facilite son enfoncement dans le sol. Le film plastique non déformable permet d'obturer les espaces vides encerclés par les mailles grillagées (non représentés): il empêche donc les limaces de se faufiler à travers ces mailles. La résistance à la déformation de cette couverture en film plastique et son plaquage contre le grillage empêchent les gastéropodes de se frayer un passage entre ces deux éléments. La résistance du film aux ultraviolets optimise la pérennité de la barrière généralement destinée à être installée en milieu extérieur.

Sur le mode de réalisation représenté sur les figures 1A à 1D, la grille 14 est constituée d'un grillage métallique (e.g. d'environ 1 mm d'épaisseur) présentant des mailles entourant des espaces vides de formes carrées (e.g. d'environ 13 mm de côté). Ces dimensions, qui correspondent aux cotes standards adoptées par de nombreux fabricants de grillages, sont données à titre d'exemple nullement limitatif.

Cette configuration de la grille 14 autorise éventuellement les limaces et les gastéropodes de grandes tailles à passer une partie antérieure de leur corps au travers des mailles, mais elle empêche ces animaux de s'accrocher à sa surface inférieure. Les dimensions des espaces vides entourés par les mailles sont également suffisamment petites pour empêcher les animaux ciblés de cheminer en s'accrochant à la face interne ou face inférieure de la paroi plafond 13.

La hauteur prédéterminée de la cloison 16a confère à l'espace 15 une hauteur suffisamment importante pour empêcher les gastéropodes de la catégorie ciblée de ramper sens dessus dessous en s'accrochant, simultanément, à cheval, sur les faces inférieures de la grille 14 et de la paroi plafond 13.

Cette hauteur prédéterminée de l'espace 15 peut être inférieure à la hauteur du dos de la majorité des gastéropodes de grandes tailles. Cette hauteur relativement faible de l'espace 15 empêche ou dissuade les animaux de cheminer dans l'espace 15.

La cloison 16b située à proximité du socle 12 contribue également à bloquer le cheminement des animaux ciblés aux confins du socle 12 et de la grille 14, c'est-à-dire à l'orée de cette grille 14.

La hauteur relativement faible de l'espace 15 et la cloison 16b constituent des moyens de barrage au sens du présent exposé. Ces moyens de barrage peuvent être utilisés en combinaison, comme dans l'exemple représentés, ou être utilisés seuls. En particulier, un mode de réalisation sans cloison 16b et n'ayant que la hauteur relativement faible de l'espace 15 comme moyen de barrage peut être envisagé.

La largeur prédéterminée de la grille 14 est suffisamment importante pour empêcher les gastéropodes ciblés d'enjamber cette grille 14 en prenant simultanément accroche sur le socle 12 et sur la face externe de la cloison 16a (puis sur la face supérieure de la paroi plafond 13).

Ainsi les limaces de grandes tailles qui progressent sur le socle 12, peuvent éventuellement passer une petite partie antérieure de leur corps dans une des mailles de la grille 14 adjacente au socle 12 mais leur cheminement est ensuite arrêté dès l'orée de cette grille 14, parce que les moyens de barrage précités les empêchent de progresser dans l'espace 15, et parce que la grille 14 présente à la fois une surface d'accroche trop faible pour permettre à une limace de cheminer sur la face inférieure de cette grille, et une largeur trop importante pour être enjambée.

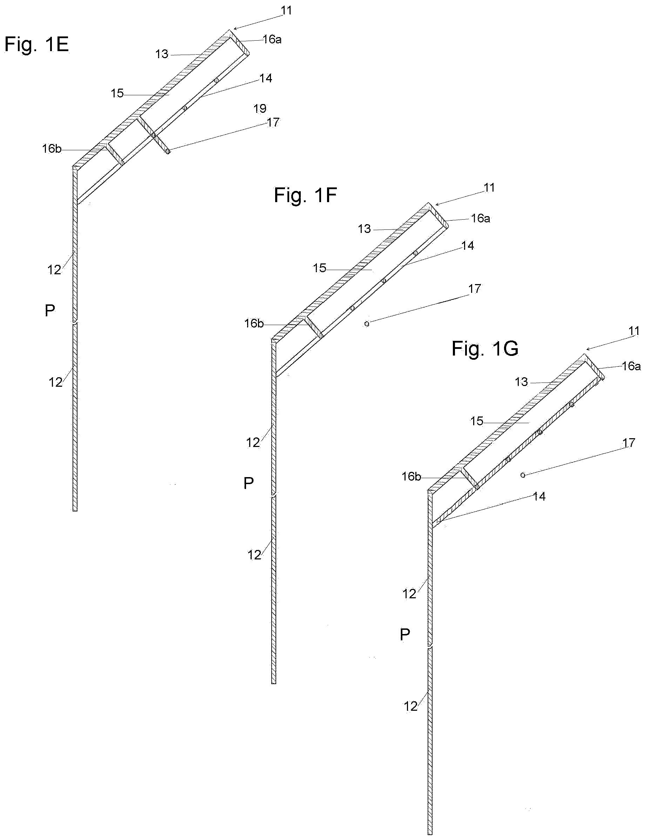

En variante, la grille 14 du dispositif présenté sur ces figures 1 peut présenter des mailles carrées en acier inoxydable. Par exemple, ces mailles peuvent mesurer environ 6,5 mm de côté et avoir une épaisseur d'environ 0,2 mm, et l'espace 15 peut présenter une hauteur d'environ 3 mm. Ces dimensions de la grille 14, données à titre d'exemple, permettent de réduire sa surface d'accroche au point d'empêcher les petites limaces et les grandes limaces de s'y accrocher. Les dimensions de ces mailles ainsi que la hauteur de l'espace empêchent les petites et les grandes limaces de circuler à cheval sur les faces inférieures de la grille et de la paroi plafond. Cette hauteur de l'espace est également suffisamment faible pour empêcher la majorité des limaces de circuler dans cet espace en rampant sur la face inférieure de la paroi plafond ou sur la face supérieure de la grille. Ainsi cette variante permet de bloquer le passage de la majorité des limaces.

Les figures 1E à 1G montrent trois vues d'une autre variante du premier mode de réalisation présenté sur les figures 1A à 1D. Cette variante présente une grille inclinée et une tige disposée sous cette grille.
- La figure 1E est une coupe transversale de la barrière, le plan de coupe passant entre deux mailles au niveau de l'attache de la tige sur la paroi plafond.
- La figure 1F est une coupe transversale de la barrière, le plan de coupe passant entre deux mailles et à travers la tige.
- La figure 1G est une coupe transversale de la barrière, le plan de coupe passant au niveau d'une maille et à travers la tige.

Dans cette variante, la paroi plafond 13 et la grille 14 divergent de la verticale sans être à l'horizontale. Une tige 17 est liée au plafond à ses deux extrémités par l'intermédiaire de pattes 19. Cette tige 17 s'étend suivant la direction longitudinale de la barrière 11 bis. Cette tige 17 peut avoir une section de 0,5 mm de diamètre et se situer à environ 4 mm de distance de la grille 14 dans un plan transversal. Hormis ces divergences, le socle 12, le plafond 13, la grille 14, l'espace 15 et les cloisons 16a, 16b, présentent des propriétés analogues à celles des éléments de mêmes références de l'exemple des figures 1A-1D.

La tige 17 présente une section suffisamment faible pour empêcher les limaces de s'y accrocher transversalement. La distance qui sépare cette tige 17 de la grille 14 est suffisamment faible pour empêcher les limaces de grande taille de se faufiler entre tige 17 et la grille 14.

Ainsi, la tige 17 empêche les limaces de progresser sur la face inférieure de la grille 14.

### (Deuxième mode de réalisation)

Un deuxième mode de réalisation du dispositif de protection est destiné à protéger une zone P, délimitée par un pot pour plantes ou support S, de l'invasion de limaces appartenant à la catégorie des petites tailles. Ce mode de réalisation comprend une barrière 21 présentée sur :

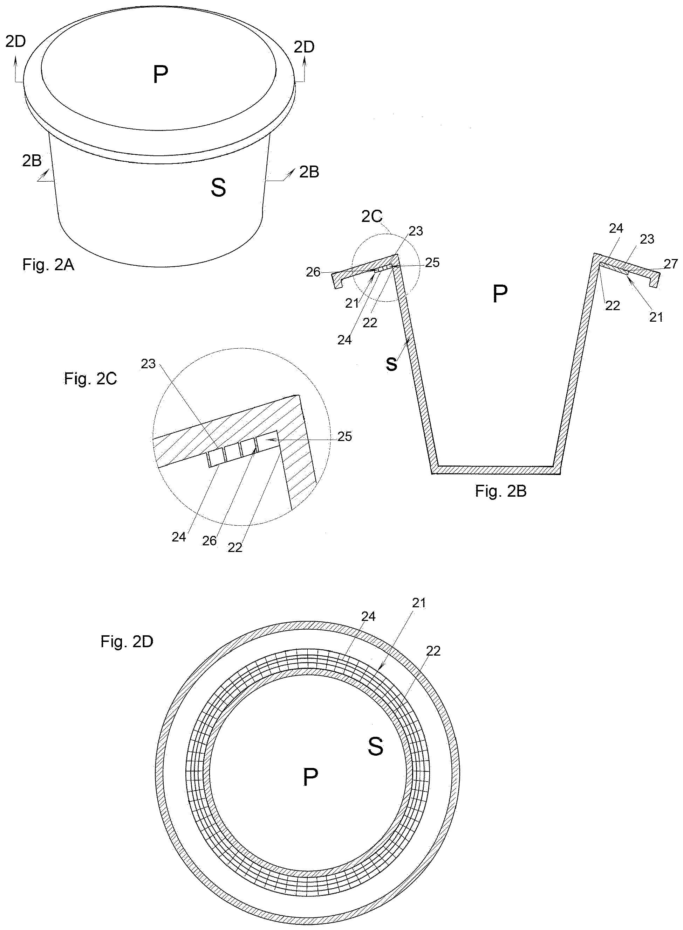

- la figure 2A qui est une vue en perspective d'un pot pour plantes où le dispositif de protection est masqué par le rebord du pot,
- la figue 2B qui est une vue en coupe verticale du pot, selon un plan sectionnant une cloison transversale 27 d'un côté du pot et passant entre deux cloisons transversales 27 de l'autre côté du pot,
- la figure 2C qui est un agrandissement d'une partie ciblée de la figure 2B, et
- la figure 2D qui est une vue en coupe au niveau de la grille 24.

Dans ce mode de réalisation le socle 22 incliné par rapport à la verticale et la paroi plafond 23 inclinée par rapport à l'horizontale sont intégrés au support S, c'est-à-dire ici au pot pour plantes. En d'autres termes, le fond et la paroi latérale du pot pour plantes forment le socle 22 tandis que le rebord supérieur du pot forme la paroi plafond 23.

La grille 24 est sensiblement parallèle à la paroi plafond 23. Les mailles de la grille 24 sont aboutées aux extrémités inférieures d'une pluralité de cloisons longitudinales 26 (voir figure 2C) et transversales 27 (voir figure 2B) entrecroisées. Ces cloisons 26, 27 mesurent, par exemple, environ 3 mm de haut. Les extrémités supérieures des cloisons entrecroisées sont contiguës à la paroi plafond 23. Ces cloisons ne présentent aucun interstice ou bien des interstices suffisamment petits pour empêcher les limaces de la catégorie visée par cette barrière 21 de passer au travers. L'entrecroisement de cette pluralité de cloison contribue à entraver la progression des limaces dans l'espace 25 situé entre la paroi plafond 23 et la grille 24.

Sur le mode de réalisation représenté sur les figures 2A à 2D, la grille 24 est constituée d'un grillage en fil métallique (e.g. d'environ 0,5 mm de diamètre, en section transversale) présentant des mailles entourant des espaces vides de formes carrées (e.g. d'environ 6,6 mm de côté).

La largeur prédéterminée de la grille 24 (e.g. d'environ 20 mm), est suffisamment importante pour empêcher les limaces de la catégorie visée de l'enjamber.

Les sections des mailles de la grille 24 ainsi que les dimensions des espaces qu'elles entourent sont prédéterminées de façon à conférer une surface d'accroche de la grille suffisamment faible pour empêcher les limaces de la catégorie visée de s'y accrocher.

La hauteur de l'espace compartimenté 25, séparant la paroi plafond 23 de la grille 24, est suffisamment importante pour empêcher les limaces de la catégorie ciblée par la barrière de progresser en cheminant à cheval sur les faces inférieures de ces deux parties 23, 24.

L'entrecroisement des cloisons transversales 27 et des cloisons longitudinales 26 empêche ou dissuade les limaces de très petites tailles de ramper sens dessus dessous sur la surface inférieure de paroi plafond 23. Cet entrecroisement constitue un moyen de barrage au sens du présent exposé.

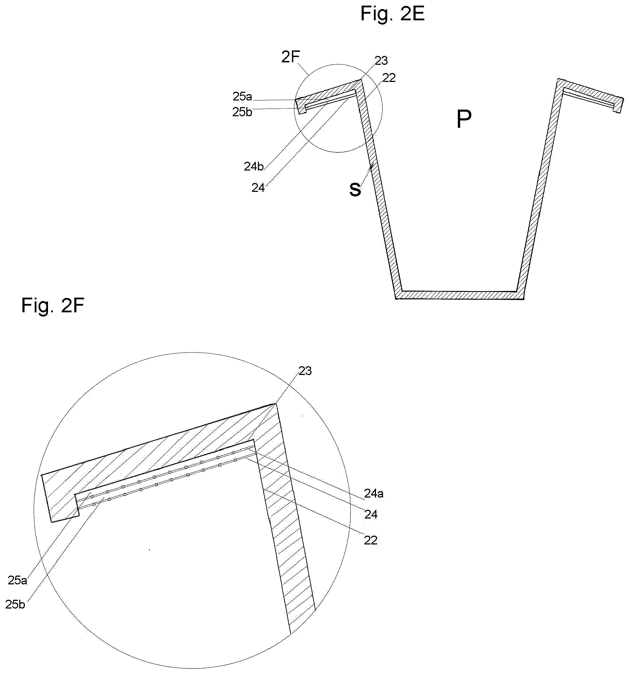

Sur la variante représentée sur les figures 2E et 2F, l'entrecroisement des cloisons longitudinales 26 et transversales 27 du dispositif présenté sur les figures 2A à 2D est remplacé par la disposition d'une grille intermédiaire 24a de même dimension que la grille 24. La grille 24 et la grille 24a sont en vis-à-vis et présentent, par exemple, une largeur de 50 mm. Plutôt que d'être décalées les unes par rapport aux autres, les mailles des grilles 24 et 24a peuvent être alignées (i.e. être disposées symétriquement par rapport à un plan médian s'étendant entre les grilles 24 et 24a). Le sous espace 25a créé entre le plafond 23 et la grille intermédiaire mesure par exemple 2 mm. Le sous espace 25b créé entre la grille intermédiaire 24a et la grille 24 mesure par exemple 3 mm. Les mailles des grilles 24 et 24a peuvent présenter la même forme et les mêmes dimensions. Par exemple, il peut s'agir de mailles carrées d'environ 6,5 mm de côté et d'environ 0,2 mm d'épaisseur. Hormis ces différences, les éléments de la variante décrite sur les figures 2E-2F présentent les mêmes propriétés que les éléments de mêmes références décrits sur les figures 2A-2D.

Les hauteurs différentes des sous espace 25a et 25b, déterminées par la disposition de la grille intermédiaire 24a, permettent de bloquer des animaux de tailles différentes. Les dimensions des grilles associant, par exemple, des mailles de 6,5 mm de côté et de 0,2 mm d'épaisseur permettent de réduire leur surface d'adhérence au point d'entraver l'accrochage des limaces de petites et de grandes tailles. En outre, la largeur suffisamment importante des grilles 24 et 24a (e.g. 50 mm ou plus) empêche les petites et les grandes limaces d'enjamber ces grilles.

### (Troisième mode de réalisation)

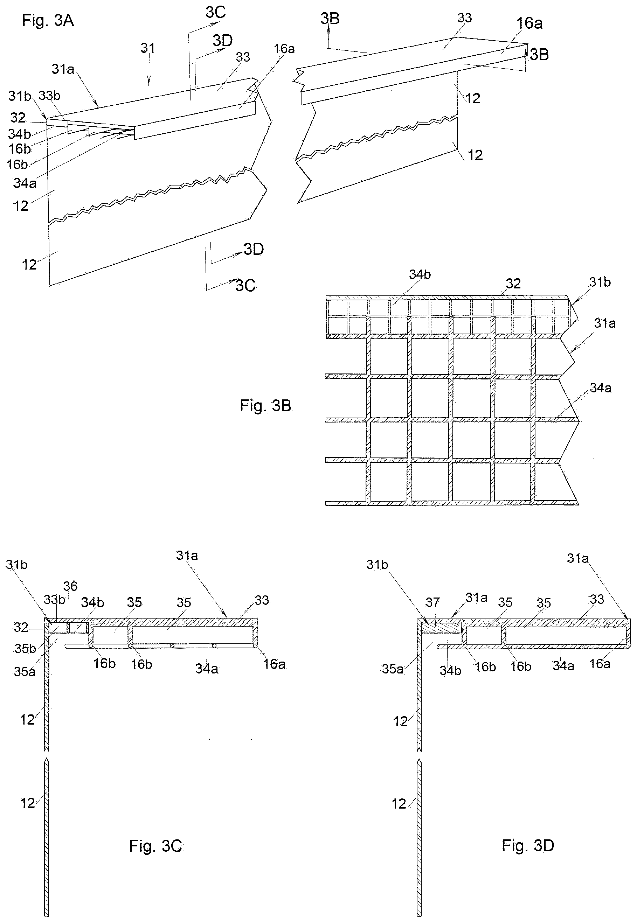

Les figures 3A à 3D illustrent un dispositif de protection destiné à être planté dans le sol et à faire obstacle à des limaces de deux catégories de tailles différentes.

Ce mode de réalisation comprend une barrière 31 présentée sur :
- la figure 3A qui est une vue en perspective d'une barrière 31 destinée à être enfoncée dans le sol (non représenté),
- la figue 3B qui est une vue en coupe horizontale au niveau de la grille 34a de la figure 3A,
- la figure 3C qui est une vue en coupe transversale de la barrière 31, la coupe étant effectuée au niveau des espaces vides situés entres les mailles de la grille 34a,
- la figure 3D qui est une vue en coupe transversale de la barrière 31, la coupe étant effectuée au niveau des portions des mailles de la grille 34a perpendiculaires au socle.

Ce dispositif comporte une barrière 31 constituée d'une barrière 31b imbriquée au sein d'une barrière 31a.

La barrière 31a cible les limaces de grandes tailles. Son socle 12, et sa cloison 16a présentent des propriétés analogues aux éléments de mêmes références de la barrière 11, mises à part éventuellement quelques millimètres de hauteur de différence. Leurs propriétés ne seront donc pas davantage décrites.

La partie supérieure du socle 12 située du côté opposé à la zone P de végétaux à protéger ainsi que l'orée de la paroi plafond 33, servent respectivement de socle 32 et de paroi plafond 33b à une barrière imbriquée 31b ciblant les limaces de petites tailles.

Dans ce troisième mode de réalisation du dispositif, la paroi plafond 33 présente une épaisseur légèrement augmentée, dans la portion située entre l'extrémité de la barrière imbriquée 31b et la cloison 16a.

L'extrémité inférieure de la cloison 16a est aboutée à une grille 34a sensiblement horizontale qui s'étend en direction du socle 12. Les sections et les dimensions des mailles de cette grille 34a présentent des propriétés analogues aux mailles de la grille 14 de la barrière 11, à l'exception des mailles de la rangée de mailles la plus proche du socle 12.

En effet, ces mailles présentent seulement trois côtés. Leur quatrième côté en regard du socle 12 est inexistant et les extrémités libres de ces mailles ouvertes pointent vers le socle 12 sans toutefois le toucher, afin de dissuader les limaces de petites tailles d'atteindre la grille 34a. En effet, les limaces de petites tailles qui cheminent sur le socle 12 ne sont pas incitées à élancer leur corps dans le vide pour s'accrocher ensuite sur une des mailles ouvertes de cette paroi.

En variante, par rapport à la barrière 11 précédemment décrite, les mailles les plus proches d'une des extrémités longitudinales de cette grille 34a ont seulement trois côtés (voir fig. 3B). Ainsi, lorsque deux barrières sont juxtaposées, la surface d'accroche des deux grilles 34a adjacentes reste faible au niveau de la jointure.

La partie supérieure du socle 12 située du côté opposé à la zone P de végétaux à protéger ainsi que l'orée de la paroi plafond 33, servent respectivement de socle 32 et de paroi plafond 33b à la barrière imbriquée 31b.

Cette barrière 31b cible les limaces de petites tailles. Les mailles de sa grille 34b sont aboutées aux extrémités inférieures d'une pluralité de cloisons longitudinales 36 et transversales 37 entrecroisées. Le côté des mailles de la rangée la plus proche du socle est intégré au socle. Les réseaux de cloisons 36 et 37 ne seront pas davantage décrits, car hormis leurs formes rectilignes et non curvilignes, leurs propriétés sont identiques aux éléments correspondants de la barrière 21 des figures 2A et 2D.

Mise à part sa direction rectiligne et non circulaire, la grille 34b présente les mêmes propriétés que la grille 24 de la barrière 21. En outre, elle fait également office de paroi plafond pour les limaces de grandes tailles.

L'espace 35a situé entre la grille 34a et la grille 34b présente les mêmes propriétés que l'espace 15 de la barrière 11 ciblant les grandes limaces, bien que sa hauteur soit légèrement moindre.

La hauteur de l'espace 35a situé entre la grille 34a et la grille 34b est déterminée de manière à présenter une hauteur légèrement moindre que la hauteur de l'espace 15 de la barrière 11, tout en conservant des propriétés analogues à cet espace 15.

L'épaisseur de la paroi plafond 33, en regard de l'espace 35 est déterminée de manière à ce que cet espace 35 présente une hauteur légèrement supérieure à la hauteur de l'espace 15 de la barrière 11, tout en conservant des propriétés analogues à cet espace 15.

Ces réglages, de l'épaisseur de la paroi plafond 33 et des hauteurs des espaces 35a et 35, permettent, d'intégrer la hauteur de la barrière 31b au sein de la barrière 31a, tout en conservant, aux espaces 35 et 35a, les propriétés et avantages de l'espace 15 de la barrière 11 ciblant les grandes limaces.

En variante, la paroi plafond 33 aurait pu présenter un amincissement en regard de la barrière 31b ou encore une épaisseur constante mais une forme crénelée adaptée aux hauteurs requises pour les espaces 35 et 35a.

Deux cloisons 16b, présentant les mêmes propriétés et les mêmes avantages que la cloison 16b de la barrière 11, sont disposées dans l'espace 35. Elles ne seront pas davantage décrites.

Ainsi ce troisième mode de réalisation du dispositif comportant deux barrières imbriquées permet de stopper la progression des gastéropodes terrestres appartenant aux catégories des petites et des grandes tailles.

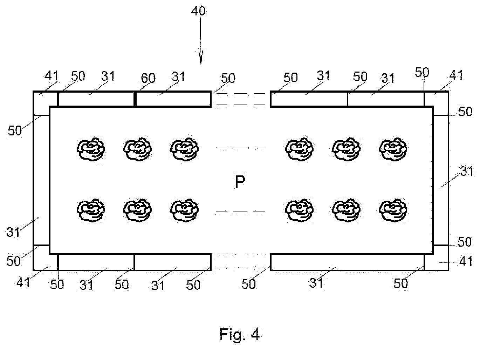

Dans le mode de réalisation illustré sur la figure 4, le dispositif de protection référencé 40 dans son ensemble, comprend quatre barrières d'angles 41, une pluralité de barrières rectilignes 31 identiques aux barrières 31 précédemment décrites, ainsi que des moyens d'aboutement 50 et un moyen d'aboutement 60 disposés aux jonctions des barrières adjacentes.

Ce dispositif de protection 40 forme un rectangle entourant une zone P de végétaux à protéger contre l'invasion des gastéropodes terrestres.

Hormis leurs formes angulaires, les barrières 41 présentent les mêmes propriétés et avantages que les barrières 31 rectilignes. Leurs éléments ne seront donc pas davantage décrits.

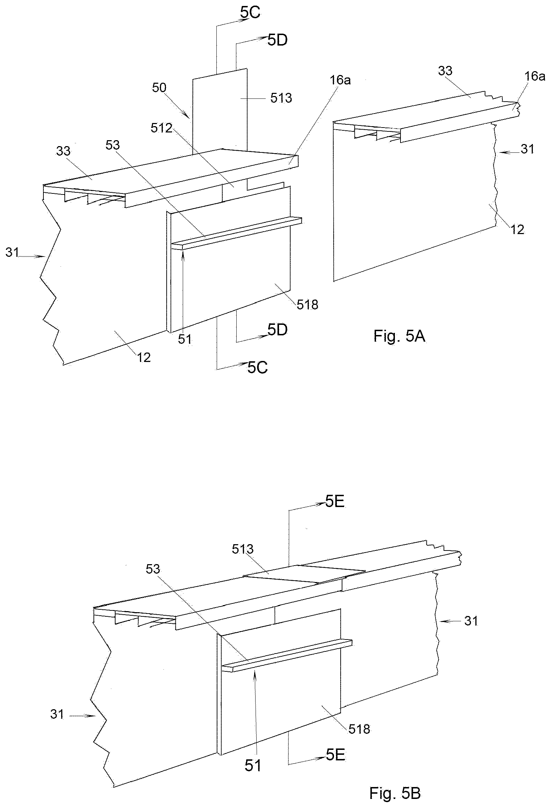

Le moyen d'aboutement 50, illustré en détail sur les figures 5A à 5E, vise à faciliter l'alignement précis de deux barrières adjacentes. Il permet aussi d'obturer l'interstice résiduel entre ces deux barrières afin d'empêcher les gastéropodes de se faufiler au travers.

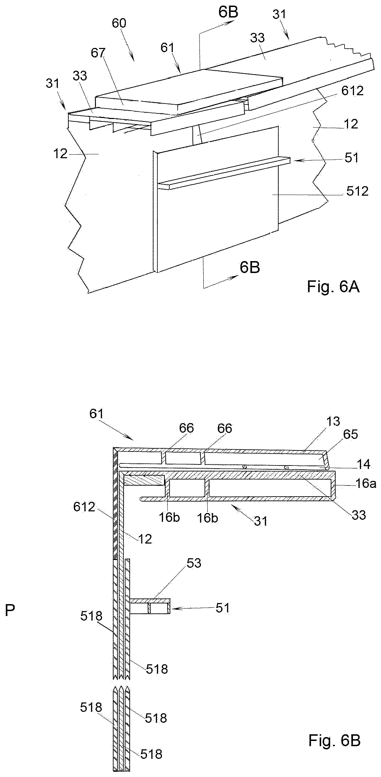

Le moyen d'aboutement 60, illustré en détail sur les figures 6A et 6B, permet d'empêcher les gastéropodes de grandes et de petites tailles de se faufiler dans l'intervalle situé entre deux barrières 31 adjacentes imprécisément alignées.

Le mode de réalisation d'un moyen d'aboutement 50 entre deux barrières 31 adjacentes, illustré sur les figures 5A à 5E, comprend un étrier glissière 518, une barrière 51 ciblant les gastéropodes 51 de petites tailles, un socle 512, une paroi plafond 513 et au moins un moyen d'attache (non représenté) du moyen d'aboutement 50 aux barrières 31.

Ces éléments sont représentés sur :
- la figure 5A, qui est une vue en perspective de deux barrières 31 non aboutées,
- la figure 5B, qui est une vue en perspective de deux barrières 31 aboutées,

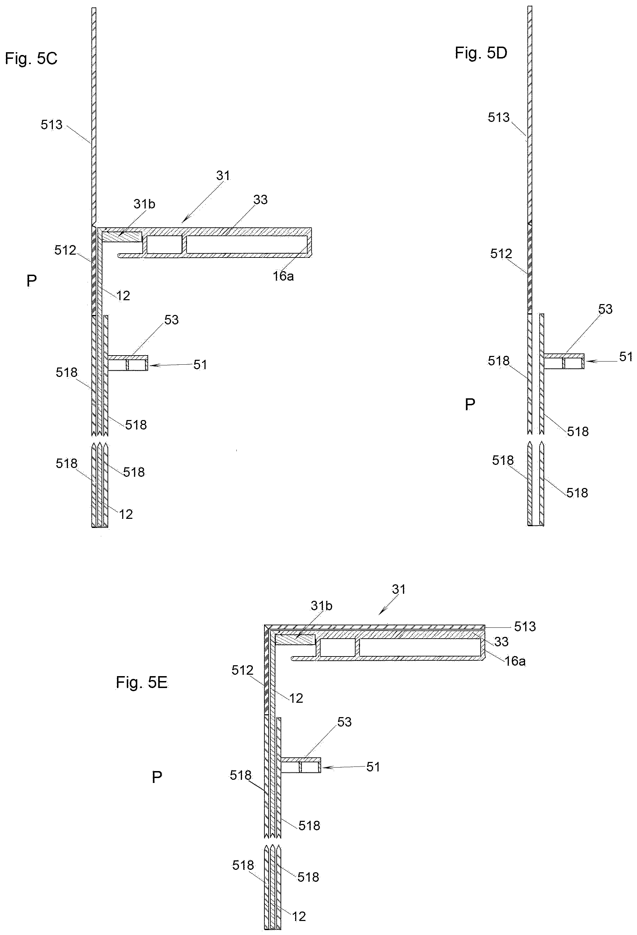

- la figure 5C qui est une vue en coupe du moyen d'aboutement 50 selon la section 5C de la figure 5A,
- la figure 5D qui est une vue en coupe du moyen d'aboutement 50 selon la section 5D de la figure 5A,
- la figure 5E qui est une vue en coupe du moyen d'aboutement 50 arrimé en position, suivant la section 5E de la figure 5B.

Le socle 12 de chaque barrière 31 comprend une paroi sensiblement plane à une extrémité et à l'autre extrémité un étrier 518 destiné à coopérer avec la paroi plane du socle 12 de la barrière 31 adjacente, suivant le principe d'une liaison glissière.

Une barrière 51 ciblant les gastéropodes de petites tailles est imbriquée, par son socle (non représenté), dans la paroi de l'étrier 518 située du côté opposé à la zone de végétaux P à protéger. Hormis sa largeur adaptée aux gastéropodes de petites tailles, la paroi plafond 53 de cette barrière 51 présente les mêmes propriétés que la paroi plafond 13 de la barrière 11. Les autres éléments de cette barrière 51 présentent les mêmes propriétés que la barrière 31b décrites pour le troisième mode de réalisation du dispositif. Ils ne seront donc pas davantage décrits.

Tel que représenté sur les figures 5A à 5E, la paroi de l'étrier 518 située du même côté que la parcelle P de végétaux à protéger est aboutée à un socle 512 destiné à être plaqué contre les extrémités des deux socles 12 non couverts par l'étrier 518. Ce socle 512 est prolongé par une paroi plafond 513 destinée à être plaquée contre les faces supérieures des extrémités des deux parois plafonds 33 des deux barrières 31 adjacentes. Avantageusement, cette paroi plafond 513 est liée à la barrière 31 par au moins un moyen d'attache (non représenté), comme par exemple mais non exclusivement, une agrafe, un rivet, un crochet, une bande collante.

L'étrier 518 optimise l'alignement des deux barrières 31 adjacentes. Il empêche également les gastéropodes terrestres d'accéder à la zone de jonction qu'il obture.

Le socle 512 et la paroi plafond 513 obstruent la zone de jonction située au delà de l'étrier 518. Ils empêchent ainsi les limaces de grandes tailles de se faufiler entre les deux barrières 31 adjacentes.

La barrière 51 empêche les gastéropodes de petites tailles d'accéder à la zone de jonction située au dessus de cette barrière 51.

Les figures 6A et 6B illustrent le mode de réalisation d'un moyen d'aboutement 60 qui permet l'aboutement efficace de deux barrières 31 dont les socles 12 adjacents sont imprécisément alignés, par exemple à cause de la nature rocailleuse du sol, ou bien lors de la jonction entre la première et la dernière barrière d'un enclos de grandes dimensions.

Le moyen d'aboutement 60 comprend les mêmes éléments que le moyen d'aboutement 50, à l'exception du socle 512 et de la paroi plafond 513, qui sont remplacées par une barrière 61, dont la paroi plafond 13 et la grille 14 présentent les mêmes propriétés que les éléments de mêmes références de la barrière 11 décrite sur les figures 1. L'espace 65 situé entre la paroi plafond et la grille 14 est compartimenté par un entrecroisement de cloisons longitudinales 66 et transversales 67 présentant des interstices inexistants ou suffisamment petits pour empêcher les grandes limaces de se faufiler au travers.

Le socle 612 de cette barrière 61 est destiné à être arrimé à la paroi de l'étrier 518 située du même côté que la parcelle de végétaux P à protéger. Il présente les mêmes propriétés que le socle 12 de la barrière 11, à l'exception de sa hauteur qui est prédéterminée de manière à permettre le plaquage de la grille 14 de la barrière 61 contre les extrémités des deux parois 33 des deux barrières 31 adjacentes.

Cette barrière 61 plaquée contre la jonction séparant deux barrières 31 adjacentes empêche les limaces de grandes tailles de se faufiler dans l'intervalle séparant ces deux barrières adjacentes 31 imprécisément alignées.

Les cloisons longitudinales 66 et transversales 67 de l'espace 65 empêchent les gastéropodes de se faufiler dans cet espace 65 pour sortir du moyen d'aboutement.

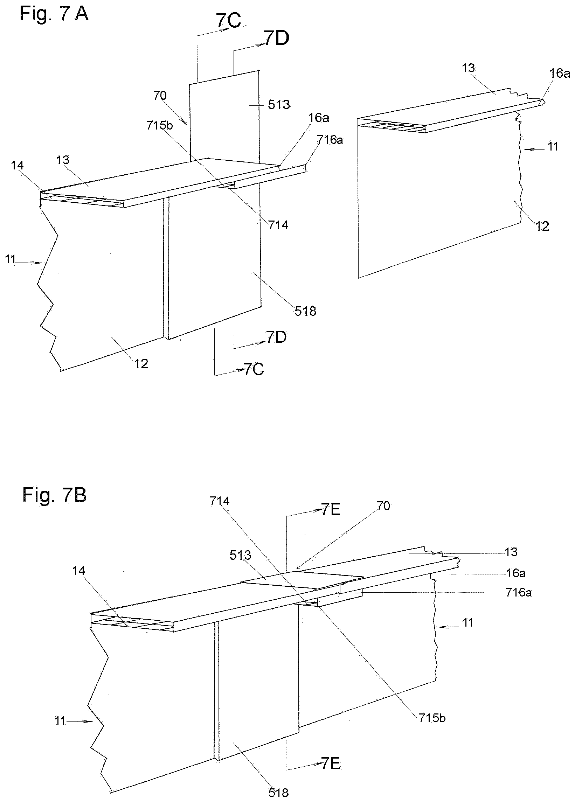

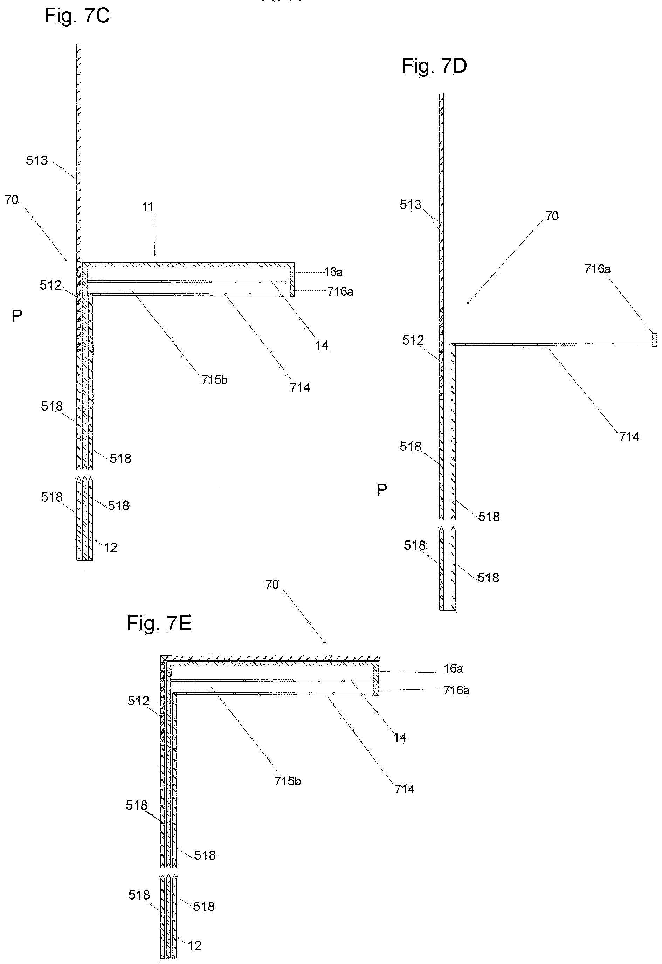

Les figures 7A à 7E représentent cinq vues d'un troisième moyen d'aboutement 70 qui permet l'aboutement efficace de deux barrières 11 dont les socles 12 adjacents sont précisément ou imprécisément alignés. Ce troisième moyen d'aboutement 70 comprend une barrière de raccordement (non référencée) emboîtée à cheval sur les deux barrières 11 aboutées. L'étrier glissière 518, le socle 512 et la paroi plafond 513 sont analogues au premier moyen de raccordement 50, à l'exception de la face de l'étrier glissière 518 située du côté opposé à la zone des végétaux à protéger. En effet, cette face s'étend vers le haut jusqu'à quelques millimètres en dessous des deux grilles 14 aboutées. L'extrémité libre de cette face de l'étrier glissière 518 est aboutée à une grille 714 présentant la même largeur et les mêmes dimensions de mailles que les grilles des deux barrières 11 aboutées. L'extrémité libre de cette grille 714 est aboutée sur toute sa longueur à la base d'une cloison 716a de hauteur identique à la hauteur séparant les grilles 14 des barrières aboutées de l'extrémité supérieure de l'étrier glissière 518. La hauteur du sous espace 715b, séparant la grille 714 des grilles 14 des barrières 11 aboutées est suffisamment faible pour empêcher les limaces de s'y faufiler. La cloison 716a est attachée aux deux barrières aboutées 11 ou bien au plafond 513 par un système de clip, de lien, d'agrafe ou de ruban collant (non représenté).

La hauteur prédéterminée de la face de l'étrier glissière 518 située du côté opposé à la zone de végétaux à protéger et les dimensions prédéterminées de la grille 714, du sous espace 715b et de la cloison 716a empêchent les limaces d'accéder à la ligne de jonction entre les deux barrières aboutées.

Les dispositifs de protection décrits ci-dessus permettent de protéger d'une façon simple et efficace une zone P contre l'invasion des gastéropodes terrestres appartenant à différentes catégories de tailles. En effet, les animaux qui abordent un dispositif comprenant une pluralité de barrières reliées par les moyens d'aboutement décrits ci-dessus sont contraints de rebrousser chemin parce qu'ils sont incapables de se faufiler au travers des interstices du dispositif, parce que la hauteur et la largeur des barrières sont trop importantes pour être enjambées et parce que les animaux sont empêchés de cheminer sur les grilles et les parois plafonds de ces barrières.

On notera que les dimensions et les formes des matériaux utilisés pour la réalisation des modes de réalisations précédemment décrits et représentés sur les différentes figures ont été essentiellement choisies pour leur disponibilité sur le marché et la facilité de leur manutention. Ces choix ne doivent en aucun cas être interprétés comme limitant la portée de l'invention. En outre, d'une manière générale, les modes ou exemples de réalisation décrits dans le présent exposé sont donnés à titre illustratif et non limitatif, une personne du métier pouvant facilement, au vu de cet exposé, modifier ces modes ou exemples de réalisation, ou en envisager d'autres, tout en restant dans la portée de l'invention.

Ainsi, par exemple, les dimensions citées peuvent être augmentées ou diminuées. Les barrières peuvent avoir des formes incurvées, ou polygonales. Les barrières et les moyens d'aboutement peuvent se présenter sous forme de kit à assembler. Les barrières peuvent être au moins en partie réalisées en métal, en matériaux synthétiques, tels que par exemple, mais pas seulement, en plastique. Les moyens d'aboutement entre deux barrières peuvent être au moins en partie réalisés en matériaux adhésifs, synthétiques, métalliques. Ces moyens d'aboutement peuvent être réduits à un aboutement avec un ruban adhésif, ou avec des moyens d'attaches de type agrafe, ou rivet ou autre.

Les socles et les parois plafonds peuvent présenter des inclinaisons variées. L'extrémité libre du socle peut présenter une forme pointue de manière à faciliter son enfoncement dans le sol. Toute partie de la barrière, des moyens d'aboutement, peut présenter des formes et des couleurs variées destinées à augmenter l'attrait visuel du dispositif (non représentées). Les grilles peuvent comprendre un réseau de fils synthétiques tendus sur un cadre (non représenté). Les mailles de ces grilles peuvent présenter des formes polygonales (non représentées), convolutées (non représentées), ou autres. Des mailles ouvertes et fermées ainsi que des mailles de sections et de dimensions variées peuvent être présentes sur une même grille. Les tiges peuvent être constituées d'un fil d'acier ou de tout autre matériau tendu entre deux languettes. Les languettes peuvent être constituées d'un piton cylindrique en métal, en plastique ou en tout autre matériau. Les cloisons longilignes et transversales peuvent être inclinées, leurs sections transversales peuvent présenter des formes rectilignes, curvilignes, ou polygonales. Ces cloisons peuvent suivrent les contours ondulés, angulaires, des mailles auxquelles leurs extrémités inférieures sont aboutées. La disposition de ces cloisons peut être variée au sein des espaces séparant les grilles des parois plafond. Les réseaux de cloisonnements entrecroisés peuvent présenter un nombre varié de rangées, ou encore réaliser des cavités de tailles différentes. Les parois destinées à être entrecroisées peuvent être composées d'une superposition de grilles de même dimensions que la grille de la barrière à laquelle elles correspondent.

Toute partie des barrières peut comporter des diverticules (non représentés) destinés par exemple à faciliter leur amarrage au support ou entre elles.

Par ailleurs, l'expression "comprenant un" doit être comprise comme étant synonyme de "comprenant au moins un", sauf si le contraire est spécifié.

Enfin, les différentes caractéristiques des modes ou exemples de réalisation décrits dans le présent exposé peuvent être considérées isolément ou être combinées entre elles. Lorsqu'elles sont combinées, ces caractéristiques peuvent l'être comme décrit ci-dessus ou différemment, l'invention ne se limitant qu'à l'étendue des revendications.

### Signes de référence

P : Zone à protéger (e.g. zone de végétaux)
S : Support
Barrières : 11, 21, 31, 31a, 31b, 41, 51, 61
Socles : 12, 22, 32, 512, 612
Parois plafonds : 13, 23, 33, 33b, 53, 513
Grilles : 14, 24, 34a, 34b, 24a, 714
Espaces séparant les parois plafonds des grilles : 15, 25, 35, 35a, 35b, 65, 25a
Sous espace séparant deux grilles superposées : 25b, 715b
Cloisons longitudinales compartimentant les espaces cités ci-dessus : 16a, 16b, 26, 36, 66, 716a
Cloisons transversales compartimentant les espaces cités ci-dessus : 27, 37, 67
Tige : 17
Patte : 19
Moyens d'aboutement entre deux barrières : 50, 60, 70
Etrier glissière : 518

## Revendications

1. Dispositif de protection d'une zone (P), contre des gastéropodes terrestres, comprenant au moins une barrière comportant :
un socle (12, 22, 32, 512, 612) destiné à être arrimé à la périphérie de la zone (P) à protéger, et
une paroi plafond (13, 23, 33, 53) aboutée audit socle (12, 22, 32, 512, 612),
**caractérisé en ce qu'**il comprend, en outre;
une grille (14, 24, 34a, 34b) s'étendant le long de la paroi plafond (13, 23, 33, 53) et à distance de celle-ci,
un espace (15, 25, 35, 35a, 35b, 65) entre la dite paroi plafond et la grille, et
au moins un moyen de barrage situé dans le dit espace,
dans lequel le socle (12, 22, 32, 512, 612) et la paroi plafond (13, 23, 33, 53) présentent des interstices inexistants ou suffisamment petits pour empêcher des gastéropodes d'une catégorie de tailles visée par la barrière (11, 21, 31, 31a, 31b, 41, 51, 61) de passer au travers, dans lequel la grille (14, 24, 34a, 34b) présente une surface d'accroche suffisamment faible pour empêcher lesdits gastéropodes de s'y accrocher, et dans lequel le ou les moyens de barrage font obstacle au cheminement desdits gastéropodes dans le dit espace (15, 25, 35, 35a, 35b, 65).

2. Dispositif de protection selon la revendication 1, dans lequel la grille (14, 24, 34a, 34b) est située en dessous de la paroi plafond (13, 23, 33, 53), la paroi plafond (13, 23, 33, 53) étant destinée à être orientée vers l'extérieur de la zone (P) à protéger dans une direction divergeant de la verticale.

3. Dispositif de protection selon la revendication 1 ou 2, dans lequel la grille (14, 24, 34a, 34b) s'étend sensiblement parallèlement à la paroi plafond (13, 23, 33, 53).

4. Dispositif de protection selon l'une quelconque des revendications précédentes, dans lequel le dit socle (22, 32) et/ou la dite paroi plafond (23, 33b) est au moins en partie intégré à un support (S) délimitant la périphérie de la zone à protéger.

5. Dispositif de protection selon l'une quelconque des revendications précédentes, dans lequel la face externe de la dite grille (14, 24, 34a, 34b) présente des sections de mailles et des dimensions d'espaces vides inter-mailles configurées pour que la surface d'accroche soit trop faible pour permettre auxdits gastéropodes de cheminer sur cette face externe.

6. Dispositif de protection selon la revendication précédente, dans lequel les dimensions desdits espaces vides inter-mailles de la grille (14, 24, 34a, 34b) sont adaptées pour empêcher lesdits gastéropodes de cheminer sur la face interne de la dite paroi plafond (13, 23, 33, 33b, 53).

7. Dispositif de protection selon l'une quelconque des revendications précédentes, dans lequel la hauteur du dit espace (15, 25, 35, 35a, 35b, 65) est suffisamment importante pour empêcher lesdits gastéropodes de cheminer à cheval sur la face externe de la grille (14, 24, 34a, 34b) et la face interne de la paroi plafond (13, 23, 33, 33b, 53).

8. Dispositif de protection selon l'une quelconque des revendications précédentes, dans lequel la hauteur du dit espace (15, 25, 35, 35a, 35b, 65) est suffisamment faible pour empêcher ou dissuader lesdits gastéropodes de s'y faufiler.

9. Dispositif de protection, selon l'une quelconque des revendications précédentes, dans lequel au moins une cloison (16a, 16b, 26, 36, 66) est disposée longitudinalement et orientée du haut vers le bas dans le dit espace (15, 25, 35, 35a, 35b, 65) et présente des interstices inexistants ou suffisamment petits pour empêcher lesdits gastéropodes de se faufiler au travers.

10. Dispositif de protection, selon l'une quelconque des revendications précédentes, dans lequel une pluralité de cloisons longitudinales (26, 36, 66) et de cloisons transversales (27, 37, 67) sont orientées du haut vers le bas dans l'espace (25, 35b, 65) et présentent des interstices inexistants ou suffisamment petits pour empêcher ou dissuader lesdits gastéropodes de se faufiler au travers.

11. Dispositif de protection, selon l'une quelconque des revendications précédentes, dans lequel la dite grille (14, 24, 34a, 34b, 24a) présente une largeur suffisante pour empêcher lesdits gastéropodes de l'enjamber.

12. Dispositif de protection, selon l'une quelconque des revendications précédentes, dans lequel au moins deux barrières (31a, 31b) sont imbriquées.

13. Dispositif de protection, selon la revendication précédente, dans lequel au moins une partie de la grille (34b) de l'une des dites barrières (31b) sert de paroi plafond (34b) à une autre des dites barrières (31a).

14. Dispositif de protection, selon la revendication 12 ou 13, dans lequel au moins une partie du dit socle (12) de l'une des dites barrières (31) sert de socle (32) à une autre des dites barrières (31b).

15. Dispositif de protection selon l'une quelconque des revendications précédentes, dans lequel ledit espace (25) est compartimenté en au moins deux sous-espaces (25a, 25b) par au moins une grille intermédiaire (24a) disposée le long de ladite paroi plafond (23), entre la paroi plafond (23) et la grille (24).

16. Dispositif de protection selon l'une quelconque des revendications précédentes, dans lequel au moins une tige (17) est disposée longitudinalement le long de la face externe de la grille (14), à une distance de la dite grille (14) suffisamment faible pour empêcher lesdits gastéropodes de se faufiler entre la dite grille (14) et la dite tige (17).

## Patentansprüche

1. Schutzvorrichtung für ein Gebiet (P) vor terrestrischen Gastropoden mit mindestens einer Barriere, umfassend:
eine Basis (12, 22, 32, 512, 612), die dazu vorgesehen ist, an dem Rand des zu schützenden Gebiets (P) befestigt zu werden, und
eine Deckenwand (13, 23, 33, 53), die mit der besagten Basis (12, 22, 32, 512, 612) verbunden ist,
**dadurch gekennzeichnet, dass** sie ferner umfasst:
ein Gitter (14, 24, 34a, 34b), das sich entlang der Deckenwand (13, 23, 33, 53) und mit einem Abstand davon erstreckt,
einen Raum (15, 25, 35, 35a, 35b, 65) zwischen der besagten Deckenwand und dem Gitter, und
mindestens ein Absperrmittel, das in dem besagten Raum angeordnet ist,
wobei die Basis (12, 22, 32, 512, 612) und die Deckenwand (13, 23, 33, 53) keine Zwischenräume aufweisen oder Zwischenräume aufweisen, die klein genug sind, um zu verhindern, dass Gastropoden einer Kategorie, für die die Barriere (11, 21, 31, 31a, 31b, 41, 51, 61) ausgelegt ist, sie durchlaufen, wobei das Gitter (14, 24, 34a, 34b) eine Oberflächengriffigkeit aufweist, die ausreichend gering ist, um zu verhindern, dass die besagten Gastropoden sich daran halten, und wobei das oder die Absperrmittel ein Kriechhindernis für die besagten Gastropoden in dem besagten Raum (15, 25, 35, 35a, 35b, 65) bildet bzw. bilden.

2. Schutzvorrichtung nach Anspruch 1, wobei das Gitter (14, 24, 34a, 34b) unterhalb der Deckenwand (13, 23, 33, 53) angeordnet ist, wobei die Deckenwand (13, 23, 33, 53) dazu vorgesehen ist, nach außerhalb des zu schützenden Gebiets (P) in einer Richtung orientiert zu sein, die von der Vertikalen verschieden ist.

3. Schutzvorrichtung nach Anspruch 1 oder 2, wobei sich das Gitter (14, 24, 34a, 34b) im Wesentlichen parallel zur Deckenwand (13, 23, 33, 53) erstreckt.

4. Schutzvorrichtung nach einem der vorstehenden Ansprüche, wobei die besagte Basis (22, 32) und/oder die besagte Deckenwand (23, 33b) zumindest teilweise in einer Stütze (S) integriert ist, welche den Rand des zu schützenden Gebiets begrenzt.

5. Schutzvorrichtung nach einem der vorstehenden Ansprüche, wobei die Außenfläche des besagten Gitters (14, 24, 34a, 34b) Maschenabschnitte aufweist und Abmessungen von Leerräumen zwischen Maschen so konfiguriert sind, dass die Oberflächengriffigkeit zu gering ist, dass die besagten Gastropoden auf dieser Außenfläche kriechen können.

6. Schutzvorrichtung nach dem vorstehenden Anspruch, wobei die Abmessungen besagter Leerräume zwischen Maschen des Gitters (14, 24, 34a, 34b) dazu eingerichtet sind, zu verhindern, dass die besagten Gastropoden auf der Innenfläche der besagten Deckenwand (13, 23, 33, 33b, 53) kriechen.

7. Schutzvorrichtung nach einem der vorstehenden Ansprüche, wobei die Höhe des besagten Raumes (15, 25, 35, 35a, 35b, 65) ausreichend groß ist, um zu verhindern, dass die besagten Gastropoden auf der Außenfläche des Gitters (14, 24, 34a, 34b) und der Innenfläche der Deckenwand (13, 23, 33, 33b, 53) kriechen.

8. Schutzvorrichtung nach einem der vorstehenden Ansprüche, wobei die Höhe des besagten Raumes (15, 25, 35, 35a, 35b, 65) gering genug ist, um zu verhindern oder zu erschweren, dass die besagten Gastropoden darin vordringen.

9. Schutzvorrichtung nach einem der vorstehenden Ansprüche, wobei mindestens eine Wand (16a, 16b, 26, 36, 66) in Längsrichtung angeordnet ist und in dem besagten Raum (15, 25, 35, 35a, 35b, 65) von oben nach unten orientiert ist und keine Zwischenräume oder Zwischenräume ausweist, die klein genug sind, um zu verhindern, dass die besagten Gastropoden in sie vordringen.

10. Schutzvorrichtung nach einem der vorstehenden Ansprüche, wobei eine Mehrzahl von Längswänden (26, 36, 66) und Querwänden (27, 37, 67) in dem Raum (25, 35b, 65) von oben nach unten orientiert sind und keine Zwischenräume oder Zwischenräume aufweisen, die klein genug sind, um zu verhindern oder zu erschweren, dass die besagten Gastropoden sie durchdringen.

11. Schutzvorrichtung nach einem der vorstehenden Ansprüche, wobei das besagte Gitter (14, 24, 34a, 34b, 24a) eine ausreichende Breite aufweist, um zu verhindern, dass die besagten Gastropoden darüber hinwegschreiten.

12. Schutzvorrichtung nach einem der vorstehenden Ansprüche, wobei mindestens zwei Barrieren (31a, 31b) verschachtelt sind.

13. Schutzvorrichtung nach dem vorstehenden Anspruch, wobei mindestens ein Teil des Gitters (34b) von einer der besagten Barrieren (31b) als Deckenwand (34b) an einer anderen der besagten Barrieren (31a) dient.

14. Schutzvorrichtung nach Anspruch 12 oder 13, wobei wenigstens ein Teil der besagten Basis (12) von einer der besagten Barrieren (31) als Basis (32) für eine andere der besagten Barrieren (31b) dient.

15. Schutzvorrichtung nach einem der vorstehenden Ansprüche, wobei der besagte Raum (25) durch mindestens ein Zwischengitter (24a), das entlang der besagten Deckenwand (23) zwischen der Deckenwand (23) und dem Gitter (24) angeordnet ist, in mindestens zwei Teilräume (25a, 25b) geteilt ist.

16. Schutzvorrichtung nach einem der vorstehenden Ansprüche, wobei mindestens eine Stange (17) in Längsrichtung entlang der Außenfläche des Gitters (14) mit einem Abstand von dem besagten Gitter (14) angeordnet ist, welcher ausreichend gering ist, um zu verhindern, dass die besagten Gastropoden zwischen dem besagten Gitter (14) und der besagten Stange (17) vordringen.

## Claims

1. A device for protection of an area (P) against terrestrial gastropods including at least one barrier comprising:
a base (12, 22, 32, 512, 612) for securing the barrier to the periphery of the area (P) to be protected, and
a ceiling wall (13, 23, 33, 53) joined to the base (12, 22, 32, 512, 612), **characterized in that** it further comprises:
a grid (14, 24, 34a, 34b) extending along the ceiling wall (13, 23, 33, 53) and spaced therefrom,
a space (15, 25, 35, 35a, 35b, 65) between the ceiling wall and the grid, and
at least one blocking means in said space,
wherein the base (12, 22, 32, 512, 612) and the ceiling wall (13, 23, 33, 53) have no interstices or interstices sufficiently small to prevent gastropods of a size category targeted by the barrier (11, 21, 31, 31a, 31b, 41, 51, 61) from slipping through, wherein the grid (14, 24, 34a, 34b) has a small enough attachment area to prevent the gastropods from attaching themselves thereto, and wherein the blocking means prevent the progression of said gastropods in said space (15, 25, 35, 35a, 35b, 65).

2. The protection device according to claim 1, wherein the grid (14, 24, 34a, 34b) is located below the ceiling wall (13, 23, 33, 53), the ceiling wall (13, 23, 33, 53) being intended to be oriented toward the outside of the area (P) to be protected in a direction diverging from the vertical.

3. The protection device according to claim 1 or 2, wherein the grid (14, 24, 34a, 34b) extends substantially parallel to the ceiling wall (13, 23, 33, 53).

4. The protection device according to any one of the preceding claims, wherein said base (22, 32) and/or the ceiling wall (23, 33b) is at least partially integrated in a support (S) delimiting the periphery of the area to be protected.

5. The protective device according to any one of the preceding claims, wherein the external face of said grid (14, 24, 34a, 34b) has mesh sections and inter-mesh empty space dimensions configured to present a too small attachment area for said gastropods to crawl on this external face.

6. The protective device according to the preceding claim, wherein the sizes of said inter-mesh empty spaces of the grid (14, 24, 34a, 34b) are adapted to prevent said gastropods from crawling on the internal face of said ceiling wall (13, 23, 33, 33b, 53).

7. The protective device according to any one of the preceding claims, wherein said space (15, 25, 35, 35a, 35b, 65) has a sufficient height to prevent said gastropods from straddling on the external face of the grid (14, 24, 34a, 34b) and on the internal face of the ceiling wall (13, 23, 33, 33b, 53).

8. The protective device according to any one of the preceding claims, wherein the height of said space (15, 25, 35, 35a, 35b, 65) is sufficiently small to prevent or deter said gastropods from slipping therethrough.

9. The protective device according to any one of the preceding claims, wherein at least one partition wall (16a, 16b, 26, 36, 66) is disposed longitudinally and oriented downwards in said space (15, 25, 35, 35a, 35b, 65) and has no interstices or interstices sufficiently small to prevent said gastropods from slipping therethrough.

10. The protective device according to any one of the preceding claims, wherein a plurality of longitudinal partition walls (26, 36, 66) and of transverse partition walls (27, 37, 67) are oriented downwards in the space (25, 35b, 65) and have no interstices or interstices sufficiently small to prevent or deter said gastropods from slipping therethrough.

11. The protective device according to any one of the preceding claims, wherein said grid (14, 24, 34a, 34b, 24a) has a width large enough to prevent said gastropods from straddling this grid.

12. The protective device according to any one of the preceding claims, wherein at least two barriers (31a, 31b) are fitted into each other.

13. The protective device according to the preceding claim, wherein at least a portion of the grid (34b) of one of said barriers (31b) serves as a ceiling wall (34b) to another of said barriers (31a).

14. The protective device according to claim 12 or 13, wherein at least one portion of said base (12) of one of said barriers (31) serves as a base (32) to another of said barriers (31b).

15. The protective device according to any one of the preceding claims, wherein said space (25) is partitioned into at least two sub-spaces (25a, 25b) by at least one intermediate grid (24a) disposed along said ceiling wall (23), between the ceiling wall (23) and the grid (14).

16. The protective device according to any one of the preceding claims, wherein at least one rod (17) is disposed longitudinally along the outer face of the grid (14) at a distance from said grid (14) sufficiently short to prevent said gastropods from slipping between the grid (14) and the rod (17).
